# EUROPÄISCHE PATENTSCHRIFT

(11) **EP 1 304 410 B1**
(45) Veröffentlichungstag und Bekanntmachung des Hinweises auf die Patenterteilung: **18.08.2004**
(21) Anmeldenummer: 02023165.0
(22) Anmeldetag: 16.10.2002
(51) Int. Cl.: D04H 13/00, D06N 5/00, E04D 5/00, B32B 17/02, B32B 27/36

(54) **Schichtstoff mit verbesserten Eigenschaften**
Laminate with improved properties
Laminé aux propriétés accrues

(30) Priorität: 18.10.2001 DE 10151411
(43) Veröffentlichungstag der Anmeldung: 23.04.2003
(73) Patentinhaber: Johns Manville Europe GmbH, 61352 Bad Homburg v.d.H. (DE)
(72) Erfinder: Lehnert, Jörg, 86830 Schwabmünchen (DE); Groh, Werner, Dr., 86830 Schwabmünchen (DE); Schöps, Michael, 10781 Berlin (DE); Weizenegger, Hermann, 86830 Schwabmünchen (DE)
(74) Vertreter: Luderschmidt, Schüler & Partner GbR

(56) Entgegenhaltungen:
- EP-A- 0 667 427
- WO-A-01/08879
- WO-A-01/08882
- WO-A-01/09420
- WO-A-01/09421
- WO-A-01/09428
- DE-A- 4 339 709

## Beschreibung

Die Erfindung betrifft einen Schichtstoff, der aus mindestens zwei Schichten besteht, nämlich einer Glasfasern enthaltenden Schicht, insbesondere einem Glasstapelfaservlies und einem Vlies aus synthetischen organischen Fasern, die durch Nadeln miteinander verbunden sind, und der insbesondere eine verbesserte Delaminierungsfestigkeit und Stabilität der Glasfasern enthaltenden Schicht bzw. des Verbundes aufweist und besonders als Trägereinlage für bituminierte Dachbahnen geeignet ist.

### Stand der Technik

Schichtstoffe, welche aus zwei Vliesen oder ggf. auch mehr Vliesen bestehen, sind bereits seit längerem bekannt und beschrieben.

So wird in der EP 0 176 847 A2 ein Schichtstoff beschrieben, der aus einem Synthesefaservlies aus synthetischen Fasern insbesondere Polyesterendlosfilamenten und einer Vliesschicht aus mineralischen Fasern aufgebaut ist. Das Synthesefaservlies und auch das Mineralfaservlies werden vorverfestigt und dann mittels Vernadeln miteinander verbunden. Weder der Beschreibung noch der Zeichnung dieser europäischen Patentanmeldung ist zu entnehmen, daß ein Teil der Synthesefasern aus der äußeren Oberfläche des Glasfaservlieses heraustreten soll.

Um die Dimensionsstabilität der in dieser europäischen Patentanmeldung beschriebenen Schichtstoffe zu verbessern, schlägt die EP 0 242 524 B1 vor, dem Mineralfaservlies noch längslaufende Verstärkungsgarne aus einem mineralischen Werkstoff beizufügen.

Die EP 0 379 100 B1 betrifft einen Schichtstoff aus einem Filamentvlies und einem Glasfaservlies, bei dessen Herstellung ebenfalls vorverfestigte Glasfaservliese und ein Synthesefaservlies miteinander vernadelt werden und anschließend einer Endverfestigung mit einem speziellen flammhemmenden Binder unterzogen, wobei der durchtränkte Schichtstoff zur Verringerung des Bindergehalts abgequetscht wird.

Ähnliche Zweilagenschichtstoffe werden auch in der ZA-94 027 63 A beschrieben.

In der PCT-Anmeldung WO 01/08882 wird ein Zwei- und Mehrlagenschichtstoff offenbart, der hergestellt wird aus einem Vlies aus Polyesterendlosfilamenten und einem Glasstapelfaservlies, indem man zunächst ein Vlies aus Polyesterendlosfilamenten (Spunbond) vorverfestigt und dieses vorverfestigte Polyester-Filamentvlies auf ein mit einem Harz, insbesondere mit einem Harnstoff- oder Melaminharz vorverfestigtes Glasstapelfaservlies aufbringt und diese beiden Vliese durch Nadeln von der Polyesterseite her in Richtung Glasfaservlies verbindet. Dabei tritt ein Teil der Filamente des Polyester-Filamentvlies durch das Glasstapelfaservlies hindurch, ein Teil der Filamente tritt heraus und legt sich auf der Oberfläche des Glasstapelfaservlieses an. Der gesamte Vliesstoff wird durch Tränken in einem Binderbad, Abquetschen und anschließendem Trocknen endverfestigt, wobei die herausgetretenen Fasern durch Verkleben auf der äußeren Oberfläche des Glasfaservlieses befestigt sind.

In der deutschen Patentanmeldung 19955730.6 wird ein Verfahren zur Herstellung von Trägern aus verbundenen Vliesen beschrieben, wobei man hydro-dynamisch bei einem Wasserstrahldruck im Bereich 100 bis 400 bar vernadelt. Auch hier kann ein Teil der organischen Fasern an der unteren Seite des Verbundes heraustreten und an der Oberfläche anliegen.

Die vorstehend erwähnten Verbundstoffe weisen bereits in vieler Hinsicht gute Eigenschaften auf. Auf der anderen Seite haben diese mit einem Binder endverfestigten und konsolidierten Schichtstoffe Defizite im Brandverhalten und Dehnungsverhalten. Hinzu kommen erhöhte Prozeß- und Materialkosten, sowie die Problematik bei der Weiterverarbeitung, z.B. bei einer späteren Bituminierung zur Herstellung einer Dachbahn, da sich der im Schichtstoff befindliche Binder nachteilig auf das Imprägnierverhalten auswirkt.

In der PCT-Anmeldung WO01/ 09420 wird ein Schichtstoff beschrieben, der u. a. aus einem Vlies aus organischen synthetischen Fasern und einem mit einem Harz vorverfestigten Glasstapelfaservlies besteht. Ein Teil der Fasern des oberen Vlieses treten dabei durch das darunterliegende Glasfaservlies hindurch. Der vernadelte Schichtstoff ist in der Wärme ausgeschrumpft und enthält keinen Binder zur Endverfestigung.

Obwohl die vorstehend erwähnten, binderfreien Verbundstoffe bereits in vieler Hinsicht über gute Eigenschaften verfügen, besteht noch ein Bedürfnis nach Verbundstoffen mit verbesserten Eigenschaften. Dies betrifft insbesondere die Delaminierungsfestigkeit und die Bruchfestigkeit der Schichtstoffe.

Die deutsche Anmeldung (Akz: 101 11 868) versucht, die Nachteile des binderfreien Schichtstoffes durch Ansengen der Vliesoberfläche zu beheben. Dieses Verfahren erhöht die Delaminierungsfestigkeit erheblich, da die durch Hitzeeinwirkung geschrumpften Polymerfilamente sich an der Glasvliesoberfläche verhaken und so eine Delaminierung erschweren. Das Verfahren ist jedoch technisch aufwändig und führt nicht zu einer Verbesserung der Bruchfestigkeit.

In der DE 43 39 709 A1 wird ein mehrlagiges Nadelvlies beschrieben, das einen sog. Festigkeitsträger aufweist, der aus einem verstreckten Stapelfaservlies aus Bikomponentenfasern besteht. Dieser Festigkeitsträgerschicht wird vorzugsweise zwischen zwei Stapelfaserlagen aus synthetischen Stapelfasern zwischen gelagert, sodass eine sandwichartige Struktur entsteht. Diese wird dann mit einer Binderlösung getränkt; sodass beide Stapelfaserlagen, d. h. die obere und untere äußere Stapelfaserlage imprägniert werden.

Eine Behandlung des mehrlagigen Nadelvlieses mit einem Binder, der mit Hilfe einer rotierenden Walze aufgebracht wird, insbesondere eine Behandlung einer glasfaserenthaltenden Schicht ist dieser Entgegenhaltung nicht zu entnehmen.

Es besteht daher ein Bedürfnis nach Verbundstoffen, welche eine weitere Verbesserung der Delaminierungsfestigkeit aufweisen, eine verbesserte Bruchfestigkeit haben, einfach und preiswert herstellbar sind, sich besonders gut zu Dachbahnen und Dichtungsbahnen verarbeiten lassen und insbesondere gut Bitumen aufnehmen und bituminierte Dach- und Dichtungsbahnen liefern, welche problemlos beim Dachbau verarbeitet werden können.

Aufgabe der Erfindung ist es deshalb, einen Schichtstoff aus mindestens zwei Schichten zur Verfügung zu stellen, der eine verbesserte Delaminierungsfestigkeit, Steifigkeit und eine erhöhte Bruchfestigkeit aufweist, der z. B. durch Tränken mit Bitumen oder anderen

Polymeren sich insbesondere als Träger für Dach- und Dichtungsbahnen eignet, insbesondere bituminierte Dach- oder Dichtungsbahnen liefert, die über hervorragende Eigenschaften verfügen, und der ferner auch mit Beschichtungen versehen werden kann, beispielsweise mit PVC.

### Zusammenfassende Beschreibung der Erfindung

Die Aufgabe wird gelöst durch ein Verfahren zur Herstellung eines Schichtstoffs, der mindestens zwei Schichten umfasst, nämlich ein Vlies aus synthetischen organischen Fasern und ein als äußere Schicht dienende Glasfasern enthaltende Schicht, indem man ein Vlies aus synthetischen organischen Fasern auf ein mit einem Harz, insbesondere einem Harnstoff- oder Melaminharz vorverfestigte Glasfaser enthaltende Schicht aufbringt, die beiden Schichten durch Nadeln in Richtung der Glasfasern enthaltenden Schicht verbindet und das Nadeln so durchführt, dass ein Teil der synthetischen Fasern durch die Glasfaser enthaltende Schicht hindurch tritt und ein Teil der synthetischen Fasern aus der äußeren Oberfläche der Glasfaser enthaltenden Schicht heraustritt, und den Schichtstoff einseitig auf die Glasfaser enthaltende Schicht mit Hilfe einer rotierenden Walze mit einem Binder versieht, wobei die Menge des aufgetragenen Binders so bemessen wird, dass der Binder in die Glasfaser enthaltende Schicht eindringt, das Vlies aus synthetischen organischen Fasern jedoch nicht oder nur unwesentlich mit dem Binder versehen wird, und anschließend den Schichtstoff einer Trocknung unterwirft.

Als Glasfasern enthaltende Schicht wird vorzugsweise ein Glasstapelfaservlies verwendet. Die Glasfasern enthaltende Schicht kann auch ein Glasfasergewebe oder ein Glasfasergelege sein.

Zur Herstellung des Schichtstoffes verwendet man vorzugsweise ein Vlies aus Polyesterendlosfilamenten. Weiterhin ist vorteilhaft, wenn ein Glasstapelfaservlies verwendet wird, das mit 5 bis 45 %, bezogen auf das Gewicht des Glasfaservlieses, eines Harnstoff- oder Melaminharz vorverfestigt ist. Bevorzugt nadelt man mechanisch mit einer Stichdichte von 15 bis 50 Stichen pro cm².

In einer weiteren vorteilhaften Ausführungsform des erfindungsgemäßen Verfahren vernadelt man hydrodynamisch. Dabei wird bevorzugt bei einem Wasserstrahldruck im Bereich von 100 bis 400 bar, bevorzugt von 100 bis 600 bar vernadelt.

Gegenstand der Erfindung ist ferner ein Schichtstoff, herstellbar nach einem der vorstehend beschriebenen Verfahren.

Ein weiterer Gegenstand der Erfindung ist die Verwendung der erfindungsgemäßen Schichtstoffe zur Herstellung von Dachbahnen und Dichtungsbahnen, insbesondere von bituminierten Dach- und Dichtungsbahnen sowie als Träger für Beschichtungen, insbesondere für Beschichtungen mit PVC und zur Herstellung von PVC - beschichteten Dachbahnen.

### Ausführliche Beschreibung der Erfindung

Zur Durchführung des erfindungsgemäßen Verfahrens wird zunächst ein Schichtstoff hergestellt, der aus Zwei- oder ggf. Mehrlagen besteht und mindestens eine Lage aus einer Glasfasern enthaltenden Schicht und mindestens eine Lage aus organischen Fasern bzw. Polymerfasern- oder Filamenten, bevorzugt Polyesterfilamenten enthält.

Zur Herstellung von Schichtstoffen, die Glasstapelfaservliese enthalten und welche bevorzugt im Rahmen der Erfindung verwendet werden, wird auf die PCT-Anmeldungen WO 01/09420A2 und WO 01/08882 verwiesen, deren Offenbarung hier ausdrücklich mit einbezogen wird.

Anstelle eines Glasfaservlieses können auch Glasgewebe oder Gelege verwendet werden, die mit einem Bindemittel wie Polyvinylacetat und Stärke, einem Harnstoff- oder Melaminharz vorverfestigt sind. In diesem Zusammenhang wird auf die PCT-Anmeldung WO 01/08879A2 verwiesen, deren Offenbarung bezüglich des Aufbaus und Herstellung des Schichtstoffs hier ausdrücklich mit einbezogen wird.

In einer weiteren vorteilhaften Ausführungsform des erfindungsgemäßen Verfahrens vernadelt man hydrodynamisch. In diesem Zusammenhang wird auf die PCT-Anmeldung WO 01/09421A2, deren Offenbarung hier ausdrücklich mit einbezogen wird. Bevorzugt vernadelt man dabei mit einem Wasserstrahldruck im Bereich von 100 bis 400 bar.

Wichtig bei dem erfindungsgemäßen Verfahren ist, daß zumindest eine der äußeren Schichten die Glasfasern enthaltende Schicht, bevorzugt das Glasstapelfaservlies bildet. Auf diesem vorzugsweise mit einem Harnstoff oder Melaminharz vorverfestigten Flächengebilde, vorzugsweise Glasstapelfaservlies wird ein Vlies aus synthetischen Fasern aufgebracht. Dieses Vlies kann aus Stapelfasern bestehen, vorzugsweise wird jedoch ein Vlies aus Polyesterfilamenten (Spunbond) verwendet. Das Polyesterfilamentvlies ist vorzugsweise mechanisch und/oder thermisch vorverfestigt und wird dann durch Nadeln in Richtung Glasfaserflächengebilde mit dem Glasfaserflächengebilde verbunden. Dabei wird das Nadeln mit einer solchen Intensität durchgeführt, daß ein Teil der synthetischen Fasern in die Glasfasern enthaltende Schicht, insbesondere in das Glasfaservlies eintritt und ein Teil dieser Fasern an der äußeren Oberfläche des Glasfaserflächengebildes heraustritt. Anschließend wird der Schichtstoff mit der Glasfaserseite über eine mit einem Binder benetzten rotierende Walze geführt, wodurch der Binder in das Glasfaserflächengebilde eindringt und die durch das Nadeln durch die Glasfaser enthaltende Schicht hindurchtretenden Polymerfilamente in der Glasfaser enthaltenden Schicht und an deren Oberfläche befestigt. Anschließend erfolgt die Trocknung des Schichtstoffes in einem Ofen.

Grundsätzlich sind alle verspinnbaren Polymere zur Herstellung des Spinnvlieses geeignet; vorzugsweise werden Polyesterfilamentvliese, insbesondere Polyethylenterephthalatfilamentvliese verwendet oder Polypropylenfilamentvliese eingesetzt. Die Polymerfilamentvliese werden mechanisch/hydrodynamisch und/oder thermisch vorverfestigt; bevorzugt erfolgt eine mechanische und eine thermische Behandlung, die gleichzeitig den Schrumpf reduziert.

Das Glasstapelfaservlies ist vorzugsweise mit 5 bis 45 %, insbesondere mit 5 bis 30 %, bezogen auf das Gewicht des Glasfaservlieses, eines Harnstoff- oder Melaminharzes vorverfestigt. Das Gewicht des Glasvlieses liegt zwischen 30 - 120 g/m², vorzugsweise zwischen 50 und 90g/m².

Bevorzugt nadelt man mechanisch mit einer Gesamtstichdichte von 15 bis 50 Stichen pro cm². In einer weiteren vorteilhaften Ausführungsform des erfindungsgemäßen Verfahren vernadelt man hydrodynamisch. Dabei wird vorteilhaft bei einem Wasserstrahldruck im Bereich von 100 bis 600 bar, bevorzugt von 100 bis 400 bar vernadelt.

Die so hergestellten Schichtstoffe, die keinen Binder zur Endverfestigung enthalten, werden sodann in einem weiteren Schritt über eine rotierende Walze geführt. Die Walzenoberfläche wird mit einem Binder benetzt, indem sie teilweise in ein Binderbad eintaucht. Die benetzte Walzenoberfläche überträgt den Binder auf nur eine Seite des Schichtstoffs, wobei der Schichtstoff mit der Glasfaserseite über die Walze geführt wird und damit nur auf dieser Seite benetzt wird.

Aufgrund des einseitigen Kontaktes der Glasfasern enthaltenden Schicht insbesondere des Glasvlieses mit der benetzten Walzenoberfläche wird der Binder durch Kapillarkräfte in die Glasfasern enthaltende Schicht insbesondere das Glasfaservlies eingesaugt. Der Auftrag des Binders muß so durchgeführt werden, daß ausreichende Mengen des Binders in die Glasfasern enthaltende Schicht eindringen, das Polyestervlies jedoch nicht oder nur unwesentlich mit dem Binder versehen wird. Die Polyesterfilamente, die durch das Nadeln in und durch die Glasfasern enthaltende Schicht bzw. durch das Glasfasernvlies genadelt wurden und teilweise dort heraustreten, werden durch den Binder in und an der Oberfläche der Glasfasern enthaltenden Schicht bzw. des Glasfasernvlieses befestigt. Das an den Glasfasern enthaltenden Schicht bzw. an dem Glasvlies liegende Polyestervlies ist binderfrei und kann somit zu den vorteilhaften Eigenschaften des erfindungsgemäßen Schichtstoffes beitragen.

Als Binder kommen Reinacrylate, Copolymerisate aus Styrol Butadien, Acrylate und Abmischungen mit duromeren Bindemitteln wie Harnstoff- oder Melaminharzen in Frage. Das Binderbad, in das die rotierende Walze zur Benetzung der Oberfläche eintaucht, ist eine wäßrige Dispersion bzw. Lösung dieser Binderbestandteile. Dabei werden 5 - 50%ige Lösungen verwendet, insbesondere haben sich Binderansätze von 10 -20% als besonders geeignet erwiesen. Typischerweise werden 10 - 40 g/m² Binder auf das Glasfasernvlies aufgebracht, bevorzugt 10 - 25 g/m². Ein anschließendes Abquetschen des Schichtstoffes findet nicht statt.

Anschließend erfolgt eine Trocknung des Schichtstoffes in einem Ofen oder sonstigen Vorrichtung.

Der einseitig aufgebrachte Binder erhöht drastisch den Delaminierungswiderstand, so daß der Verbund teilweise nicht mehr zerstörungsfrei getrennt werden kann. Die in dieser Höhe völlig unerwartete Verbesserung des Delaminierungswiderstandes ermöglicht zudem, die Stichzahl bei der Vernadelung (Nadelungsdichte) zu reduzieren. Überraschend war, daß eine Reduktion der Stichzahl von über 30 % möglich wurde. Eine geringere Nadelungsdichte reduziert dramatisch die Schädigung des Glasfasernvlieses, das einhergeht mit einer Verbesserung der mechanischen Eigenschaften des Verbundes.

Neben einer verbesserten Delaminierungsfestigkeit ist auch ein gutes Dehnungverhalten zu erkennen, da im Polymervlies nahezu keine Binderanteile vorhanden sind, die die Dehnung beeinflussen. Das Bruchverhalten ist verbessert, da der Binder im Glasvlies die Folgen der durch das Nadeln hervorgerufenen Schädigungen heilen bzw. ausgleichen kann. Damit wird eine erhöhte Verarbeitungssicherheit erreicht. Außerdem ergibt sich durch das erfindungsgemäße Verfahren eine vorteilhafte Steifigkeit des Schichtstoffes und eine verbesserte Festigkeit.

Die einseitige Aüftragsmethode macht die Verwendung eines Foulard unnötig. Damit werden auch die damit stets verbundenen erheblichen Glasfaserschädigungen vermieden. Der geringe Binderanteil in der Glasfasern enthaltenden Schicht bzw. im Glasfasernvlies macht sich nur unwesentlich im Brandverhalten bemerkbar. Die geringen Materialmengen und der einfache Prozeß ermöglichen jedoch eine erhebliche Reduktion der Herstellkosten.

Die durch das erfindungsgemäße Verfahren hergestellte Verbundstoffe zeichnen sich weiter durch eine sehr hohe und gleichmäßige Aufnahmefähigkeit für beispielsweise Bitumen oder ähnliche Massen aus, die durch Tränken mit der Bituminierungsmasse oder dergleichen in den Verbundstoff oder als Oberflächenschicht auf den Verbundstoff aufgebracht wird. Die Saugfähigkeit gegenüber diesen Materialien ist wegen des weitgehenden Fehlens des Binders im Polyester hervorragend, und es findet eine gleichmäßige und vollständige Verteilung des Bitumens im Verbundstoff statt.

Da die Aufnahme des Bitumens sehr gleichmäßig von statten geht, werden auch bituminierte Dachbahnen erhalten, die eine klare regelmäßige ebene Oberfläche aufweisen, d. h. ohne Wellenbildung. Selbst bei dem Einsatz von Trägerbahnen, die zur Längsverstärkung Verstärkungsfäden aufweisen, werden bituminierte Dachbahnen erhalten, die eine besonders gleichmäßige Oberfläche aufweisen, die keinerlei Hinweise auf die innere Struktur des Trägervlieses zeigen.

Die Schichtstoffe gemäß der Erfindung können aber auch beschichtet werden, beispielsweise durch Aufbringen von einer oder mehrere Schichten eines polymeren Materials wie PVC oder ähnlichen Materialien.
Die Haftung der Beschichtung auf dem tragenden Verbundstoff ist hervorragend. In diesem Zusammenhang wird auf die Deutsche Patentanmeldung DE 199 55 713 verwiesen, deren Offenbarung hier ausdrücklich mit einbezogen wird.

Wenn auch die Erfindung vorstehend überwiegend im Hinblick auf einen Zweilagenschichtstoff beschrieben worden ist, so ist es durchaus möglich, auch Schichtstoffe gemäß der Erfindung herzustellen, die aus mehr als zwei Schichten bestehen, beispielsweise Schichtstoffe, die außer der Glasfaserschicht, welche eine der Oberflächen des Verbundstoffes bildet, und der darauf aufgebrachten Schicht aus einem Vlies aus synthetischen organischen Fasern noch weitere Schichten aufweist, z. B. eine weitere Schicht aus organischen Fasern oder auch eine weitere Glasfaserschicht. Es können auch eine oder mehrere Schichten vorhanden sein, die Verstärkungsfäden enthalten.

Wichtig ist es, daß eine äußere Schicht, durch welche die Fasern hindurch getrieben werden und aus welcher die Fasern teilweise herausragen, eine Glasfasern enthaltende Schicht insbesondere ein Glasstapelfaservlies ist.

Es war besonders überraschend, daß die Erhöhung des Delaminierungswiderstands in einem nicht zu erwartenden Maße erreicht wurde.

Das erfindungsgemäße Verfahren eignet sich zur Behandlung von Schichtstoffen, die nicht mit Hilfe eines Binders endverfestigt sind. Es ist mittels der Erfindung möglich, einen hohe Delaminierungswiderstand und eine hohe Festigkeit des Schichtstoffes zu erreichen, ohne die Vorteile eines binderfreien Schichtstoffes zu verlieren und ohne die Nachteile einer Verwendung eines Binders ertragen zu müssen.

Die Erfindung wird durch folgende Beispiele näher erläutert:

### Beispiel 1

Aus Polyethylenterephthalat - Filamenten wird durch Ablegen auf einer Unterlage ein Vlies hergestellt und anschließend thermisch mit Hilfe eines Kalanders vorverfestigt. Dieses Vlies wird einem mit einem Melaminharz vorverfestigten Glasstapelfaservlies (Flächengewicht 60g/m²) zugeführt, wobei das Glasvlies unter dem Polyestervlies zu liegen kommt. Die beiden Vliese werden anschließend durch Vernadeln mit 39 Stichen/cm² bei einem Hubvorschubverhältnis von 12 mm/Hub miteinander verbunden. Anschließend erfolgt das vollständige Ausschrumpfen des Vlieses beim Durchgang durch einen Kalander, dessen Oberflächentemperatur 240°C beträgt. Der so hergestellte Schichtstoff besitzt ein Gesamtflächengewicht von 168g/m².

Nach der Temperaturbehandlung wird der Schichtstoff über eine Walze geführt, wobei deren Umlaufgeschwindigkeit mit der Bandgeschwindigkeit von 17m/min übereinstimmt. Die Walze taucht in ein Binderbad ein, das aus einer 15%igen wäßrigen Lösung eines Acrylat-Binder besteht. Der einseitig benetzte Schichtstoff wird anschließend in einem Ofen bei 200°C getrocknet. Der Binderanteil beträgt 20 g/m².

### Beispiel 2

Ein Träger wird entsprechend Beispiel 1 hergestellt, wobei Vliese mit einem Flächengewicht von 187 g/m² hergestellt werden.

### Beispiel 3

Ein Träger wird entsprechend Beispiel 1 hergestellt, wobei Vliese mit einem Flächengewicht von 223 g/m² hergestellt werden.

### Beispiel 4

Ein Träger wird entsprechend Beispiel 1 hergestellt, wobei Vliese mit einem Flächengewicht von 246 g/m² hergestellt werden.

**Tabelle 1**

| | | | | | | |
|---|---|---|---|---|---|---|
| zeigt die Ergebnisse der Messungen des Delaminierungswiderstandes, der Höchstzugkraft (längs/quer), der Festigkeit des Glasvlieses (l/q), der Bezugskraft bei 4% (BK4) und 15% (BK15) an den Beispielsproben und entsprechenden Vergleichsproben (*), die ohne Binderauftrag aber ansonsten identisch hergestellt wurden. | | | | | | |

| Beispiel | Flächen-Gewicht | Delamin. Widerstand | HZK(L) / HZK(Q) | Festigkeit Glas | BK4 | BK15 |
|---|---|---|---|---|---|---|
| | [g/cm²] | [daN/5cm] | [daN/5cm] | daN/5cm | DaN/5cm | daN/5cm |
| 1 | 188 | n. trennbar | 25,6/23,0 | 28,5 | 18,6 | 19,7 |
| 2 | 207 | n. trennbar | 31,8/30,8 | 28,3 | 18,8 | 22,1 |
| 3 | 243 | n. trennbar | 49,5/44,8 | 28,1 | 20,5 | 26,8 |
| 4 | 266 | n. trennbar | 55,4/52,3 | 31,4 | 22,5 | 31,0 |
| 1* | 164 | 0,46 | 15,6/14,8 | 17,9 | 5,1 | 4,9 |
| 2* | 183 | 0,42 | 21,3/19,7 | 17,9 | 5.8 | 5,6 |
| 3* | 220 | 0,3 | 33,5/32,0 | 19,5 | 7,5 | 7,3 |
| 4* | 238 | 0,25 | 41,0/37,7 | 18,2 | 8,3 | 8,4 |

## Patentansprüche

1. Verfahren zur Herstellung eines Schichtstoffs, der mindestens zwei Schichten umfaßt, nämlich ein Vlies aus synthetischen organischen Fasern und ein als äußere Schicht dienende Glasfasern enthaltende Schicht, indem man ein Vlies aus synthetischen organischen Fasern auf ein mit einem Harz, insbesondere einem Harnstoff- oder Melaminharz vorverfestigte Glasfaser enthaltende Schicht aufbringt, die beiden Schichten durch Nadeln in Richtung der Glasfasern enthaltenden Schicht verbindet und das Nadeln so durchführt, daß ein Teil der synthetischen Fasern durch die Glasfaser enthaltende Schicht hindurch tritt und ein Teil der synthetischen Fasern aus der äußeren Oberfläche der Glasfaser enthaltenden Schicht heraustritt, und den Schichtstoff einseitig auf die Glasfaser enthaltende Schicht mit Hilfe einer rotierenden Walze mit einem Binder versieht, wobei die Menge des aufgetragenen Binders so bemessen wird, daß der Binder in die Glasfaser enthaltende Schicht eindringt, das Vlies aus synthetischen organischen Fasern jedoch nicht oder nur unwesentlich mit dem Binder versehen wird, und anschließend den Schichtstoff einer Trocknung unterwirft.

2. Verfahren nach Anspruch 1, **dadurch gekennzeichnet, daß** man als Glasfasern enthaltende Schicht ein Glasstapelfaservlies verwendet.

3. Verfahren nach Anspruch 1, **dadurch gekennzeichnet, daß** man als Glasfasern enthaltende Schicht ein Glasfasergelege verwendet.

4. Verfahren nach Anspruch 1, **dadurch gekennzeichnet, daß** man als Glasfasern enthaltende Schicht ein Glasfasergewebe verwendet.

5. Verfahren nach mindestens einem der Ansprüche 1 - 4, **dadurch gekennzeichnet, daß** der Binder ein Acrylat-, Harnstoff- oder Melaminharzbinder ist.

6. Verfahren nach Anspruch 1, **dadurch gekennzeichnet, daß** 10 - 40 g/m² des Binders, bevorzugt 10 - 25 g/m², auf die Glasfaser enthaltende Schicht bzw. das Glasvlies mittels einer rotierenden Walze aufgebracht wird.

7. Verfahren nach mindestens einem der Ansprüche 1 - 6, **dadurch gekennzeichnet, daß** man mechanisch mit einer Stichdichte von 15 bis 50 Stichen pro cm², nadelt.

8. Verfahren nach mindestens einem der Ansprüche 1 - 6, **dadurch gekennzeichnet, daß** man hydrodynamisch vernadelt.

9. Verfahren nach Anspruch 8, **dadurch gekennzeichnet, daß** man bei einem Wasserstrahldruck im Bereich von 100 bis 600 bar, insbesondere 100 bis 400 bar vernadelt.

10. Verfahren nach mindestens einem der Ansprüche 1 - 9, **dadurch gekennzeichnet, daß** man ein Vlies aus Polyesterendlosfilamenten verwendet.

11. Verfahren nach Anspruch 2, **dadurch gekennzeichnet, daß** man ein Glasstapelfaservlies verwendet, das mit 5 bis 45 %, bezogen auf das Gewicht des Glasfaservlieses, eines Harnstoff- oder Melaminharz vorverfestigt ist.

12. Verfahren nach mindestens einem der Ansprüche 1 - 11, **dadurch gekennzeichnet, daß** man mindestens eine Schicht verwendet, welche Verstärkungsfäden enthält.

13. Schichtstoff, herstellbar nach einem Verfahren gemäß einem der Ansprüche 1 bis 12.

14. Verwendung der Schichtstoffe nach Anspruch 13 zur Herstellung von Dachbahnen oder Dichtungsbahnen.

15. Verwendung der Schichtstoffe nach Anspruch 14 zur Herstellung von bituminierten Dach- oder Dichtungsbahnen.

## Claims

1. A process for producing a laminate which encompasses at least two layers, namely a nonwoven made from synthetic organic fibers and, serving as outer layer, a layer comprising glass fibers, by applying a nonwoven made from synthetic organic fibers to a layer comprising glass fiber and preconsolidated using a resin, in particular using a urea resin or melamine resin, bonding the two layers by needling in the direction of the layer comprising glass fibers, and carrying out the needling in such a way that some of the synthetic fibers penetrate the layer comprising glass fiber and some of the synthetic fibers emerge from the outer surface of the layer comprising glass fiber, and using a rotating roll to provide one side of the laminate with a binder, onto the layer comprising glass fiber, wherein the amount of the binder applied is chosen in a way that the binder penetrate into the layer comprising glass fibers, but in a way that there is no, or only insignificant, provision of the binder to the polyester nonwoven, and then subjecting the laminate to drying.

2. The process as claimed in claim 1, wherein a staple glass fiber nonwoven is used as layer comprising glass fibers.

3. The process as claimed in claim 1, wherein a glass fiber scrim is used as layer comprising glass fibers.

4. The process as claimed in claim 1, wherein a glass fiber woven is used as layer comprising glass fibers.

5. The process as claimed in at least one of claims 1-4, wherein the binder is an acrylate resin binder, urea resin binder, or melamine resin binder.

6. The process as claimed in claim 1, wherein a rotating roll is used to apply 10-40 g/m² of the binder, preferably 10-25 g/m², to the layer comprising glass fiber or to the glass nonwoven.

7. The process as claimed in at least one of claims 1-6, wherein needling is carried out mechanically with a perforation density of from 15 to 50 perforations per cm².

8. The process as claimed in at least one of claims 1-6, wherein hydrodynamic needling is used.

9. The process as claimed in claim 8, wherein a water jet pressure in the range from 100 to 600 bar, in particular from 100 to 400 bar, is used for needling.

10. The process as claimed in at least one of claims 1-9, wherein use is made of a non-woven made from continuous polyester filaments.

11. The process as claimed in claim 2, wherein use is made of a staple glass fiber non-woven which has been preconsolidated using from 5 to 45%, based on the weight of the glass fiber nonwoven, of a urea resin or melamine resin.

12. The process as claimed in at least one of claims 1-11, wherein use is made of at least one layer which comprises reinforcing threads.

13. A laminate which can be produced by a process as claimed in any of claims 1 to 12.

14. The use of the laminates as claimed in claim 13 for producing prefabricated roofing or producing waterproofing sheets.

15. The use of the laminates as claimed in claim 14 for producing bituminized prefabricated roofing or producing bituminized waterproofing sheets.

## Revendications

1. Procédé pour la fabrication d'un stratifié qui comprend au moins deux couches, plus précisément un non-tissé constitué par des fibres organiques synthétiques et une couche contenant des fibres de verre, faisant office de couche externe, comprenant le fait d'appliquer un non-tissé constitué par des fibres organiques synthétiques sur une couche contenant des fibres de verre, soumise à un renforcement préalable avec une résine, en particulier avec une résine uréique ou une résine de mélamine, le fait de relier les deux couches par aiguilletage dans la direction de la couche contenant des fibres de verre et le fait de réaliser l'aiguilletage de telle sorte qu'une partie des fibres synthétiques traverse la couche contenant des fibres de verre et qu'une partie des fibres synthétiques traverse vers l'extérieur la surface externe de la couche contenant des fibres de verre, et le fait de munir le stratifié d'un liant, sur une face de la couche contenant des fibres de verre, à l'aide d'un rouleau rotatif, la quantité du liant appliqué étant mesurée de telle sorte que le liant pénètre dans la couche contenant des fibres de verre, le non-tissé constitué par des fibres organiques synthétiques n'étant toutefois pas muni du liant ou seulement en une quantité négligeable, et le fait de soumettre ensuite le stratifié à un séchage.

2. Procédé selon la revendication 1, **caractérisé en ce qu'**on utilise, à titre de couche contenant des fibres de verre, un non-tissé contenant des fibres de verre discontinues.

3. Procédé selon la revendication 1, **caractérisé en ce qu'**on utilise, à titre de couche contenant des fibres de verre, un non-tissé contenant des fibres de verre.

4. Procédé selon la revendication 1, **caractérisé en ce qu'**on utilise, à titre de couche contenant des fibres de verre, un tissu contenant des fibres de verre.

5. Procédé selon l'une quelconque des revendications 1 à 4, **caractérisé en ce que** le liant est un liant à base de résine acrylate, à base de résine uréique ou à base de résine de mélamine.

6. Procédé selon la revendication 1, **caractérisé en ce qu'**on applique le liant à concurrence de 10 à 40 g/m², de préférence de 10 à 25 g/m², sur la couche contenant des fibres de verre respectivement sur le non-tissé en fibres de verre à l'aide d'un rouleau rotatif.

7. Procédé selon au moins une des revendications 1 à 6, **caractérisé en ce qu'**on procède à un aiguilletage mécanique avec une densité de points de 15 à 50 points par cm².

8. Procédé selon au moins une des revendications 1 à 6, **caractérisé en ce qu'**on procède à un aiguilletage hydrodynamique.

9. Procédé selon la revendication 8, **caractérisé en ce qu'**on met en oeuvre un aiguilletage sous une première pression de jet d'eau dans la plage de 100 à 600 bars, en particulier de 100 à 400 bars.

10. Procédé selon au moins une des revendications 1 à 9, **caractérisé en ce qu'**on utilise un non-tissé constitué par des filaments sans fin en polyester.

11. Procédé selon la revendication 2, **caractérisé en ce qu'**on utilise un non-tissé contenant des fibres de verre discontinues, qui a été soumis à un renforcement préalable à l'aide d'une résine uréique ou d'une résine de mélamine, à concurrence de 5 à 45 %, rapportés au poids du non-tissé contenant des fibres de verre.

12. Procédé selon au moins une des revendications 1 à 11, **caractérisé en ce qu'**on utilise au moins une couche qui contient des fils de renforcement.

13. Stratifié que l'on peut préparer conformément à un procédé selon l'une quelconque des revendications 1 à 12.

14. Utilisation des stratifiés selon la revendication 13 pour la fabrication de bandes pour des toits ou de bandes d'étanchéisation.

15. Utilisation des stratifiés selon la revendication 14 pour la fabrication de bandes bitumées pour des toits ou pour l'étanchéisation.
